# EUROPÄISCHE PATENTSCHRIFT

(11) **EP 4 282 663 B1**
(45) Veröffentlichungstag und Bekanntmachung des Hinweises auf die Patenterteilung: **25.12.2024**
(21) Anmeldenummer: 23020234.3
(22) Anmeldetag: 17.05.2023
(51) Int. Cl.: B42D 13/00, B42D 25/23, B42D 25/24, B42D 25/369, B42D 25/455, B42D 25/46, C09D 11/037

(54) **VERFAHREN ZUR HERSTELLUNG EINES SICHERHEITSMERKMALS, SICHERHEITSMERKMAL FÜR EINEN DATENTRÄGER, DATENTRÄGER UND LAMINIERBLECH**
METHOD FOR PRODUCING A SECURITY FEATURE, SECURITY FEATURE FOR A DATA CARRIER, DATA CARRIER AND LAMINATION SHEET
PROCÉDÉ DE FABRICATION D'UNE CARACTÉRISTIQUE DE SÉCURITÉ, CARACTÉRISTIQUE DE SÉCURITÉ POUR UN SUPPORT DE DONNÉES, SUPPORT DE DONNÉES ET FEUILLE DE LAMINAGE

(30) Priorität: 24.05.2022 DE 102022001819
(43) Veröffentlichungstag der Anmeldung: 29.11.2023
(73) Patentinhaber: Giesecke+Devrient ePayments GmbH, 81677 München (DE)
(72) Erfinder: Fabian, Cristina, 85748 Garching (DE); Kohl, Klaus, 83714 Miesbach (DE); Riedl, Josef, 85395 Attenkirchen (DE); Sauer, Thorsten, 85435 Erding (DE)
(74) Vertreter: Giesecke+Devrient IP

(56) Entgegenhaltungen:
- EP-A1- 2 965 920
- EP-A2- 2 886 357
- WO-A1-2011/107527
- US-A1- 2021 162 795

## Beschreibung

Die Erfindung betrifft ein Verfahren zur Herstellung eines Sicherheitsmerkmals für einen Datenträger, ein Sicherheitsmerkmal für einen Datenträger, einen Datenträger mit einem Sicherheitsmerkmal und ein Laminierblech für die Herstellung eines Sicherheitsmerkmals.

Datenträger wie Wertdokumente, beispielsweise Pass- und Ausweisdokumente, Ausweiskarten, Kreditkarten, Bankkarten und dergleichen werden in steigendem Maß in öffentlichen Bereichen, aber auch im innerbetrieblichen Bereich eingesetzt. Optisch variable Sicherheitselemente mit einem ferromagnetischen Material sind bekannt. Magnetisch orientierbare Effektpigmente sind zum Beispiel unter dem Handelsnamen OVMI ("optically variable magnetic ink") der Firma SICPA bekannt. Derartige Farbpigmente mit einem magnetischen Moment werden für optisch variable Sicherheitselemente verwendet. Dazu werden die Pigmente mittels eines externen Magnetzylinders unmittelbar nach dem Druck ausgerichtet, solange die Farbe noch flüssig ist. Anschließend wird das Bindemittel der Farbe mittels eines UV-Bestrahlers oder UV-Trockners ausgehärtet, um die Ausrichtungen der Pigmente zu fixierer

Dokument US 2021/0162795 A1 betrifft ein gattungsgemäßes Verfahren zur Herstellung eines Sicherheitsmerkmals für einen Datenträger.

Aufgabe der vorliegenden Erfindung ist es, die Herstellung von Sicherheitsmerkmalen mit magnetisch orientierbaren Effektpigmenten zu vereinfachen.

Diese Aufgabe wird durch ein Verfahren zur Herstellung eines Sicherheitsmerkmals, ein Sicherheitsmerkmal für einen Datenträger, einen Datenträger beziehungsweise ein Laminierblech gemäß den unabhängigen Patentansprüchen gelöst. Ausgestaltungen und Weiterbildungen der Erfindung sind in den abhängigen Ansprüchen angegeben.

Ein erfindungsgemäßes Verfahren zur Herstellung eines Sicherheitsmerkmals für einen Datenträger ist in Anspruch 1 definiert.

Ein Grundgedanke der vorliegenden Erfindung besteht darin, dass die magnetisch orientierbaren Effektpigmente während des ohnehin vorzunehmenden Laminierens ausgerichtet werden.

Auf dem Laminierblech sind Magnete (Permanent- oder Elektromagnete) eingearbeitet oder vorgesehen. Während des Laminierprozesses wird die Farbe mit den Magnetpigmenten verflüssigt, so dass diese in eine bestimmte Richtung ausgerichtet werden können. Durch Erkalten der Folien erstarren die ausgerichteten Magnetpigmente. Durch die Ausrichtung der Magnetpigmente können Sicherheitsfeatures zum Beispiel mit Effekten durch wechselnde Blickrichtungen realisiert werden.

Das Substrat mit der durch den Lack oder die Farbe beschichteten zum Beispiel bedruckten Folie kann als Bogen oder Endlosfolie beziehungsweise Rollenware vorliegen. Nach dem Laminieren werden dann einzelne Sicherheitsmerkmale oder Datenträger zum Beispiel durch Stanzen der Karten herausgetrennt.

Das hier vorgeschlagene Verfahren hat den Vorteil, dass auf eine zusätzliche UV-Trocknung verzichtet werden kann. Da diese zusätzliche UV-Trocknung entfällt, kann die Herstellung vereinfacht werden.

Es kann vorgesehen sein, dass der Lack oder die Farbe ein lösemittelhaltiges, wasserbasierendes 1k oder 2k System ist. Die Verarbeitung derartiger Systeme ist einfach, bekannt und gut in den Herstellungsprozess integrierbar.

Es kann ferner vorgesehen sein, dass die magnetisch orientierbaren Effektpigmente verkapselt sind. Die Verkapselung schützt die Effektpigmente vor Beschädigung und Alterung und kann das Fließverhalten der Farbe oder des Lacks verbessern.

Ein erfindungsgemäßes Sicherheitsmerkmal für einen Datenträger ist in Anspruch 5 definiert und durch das zuvor beschriebene Verfahren erhältlich. Es gelten die gleichen Vorteile und Modifikationen wie zuvor beschrieben.

Es kann vorgesehen sein, dass die Folie eine Dicke von etwa 25 - 300 µm, vorzugsweise von 50 - 150 µm aufweist. Insbesondere wenn die Farbe oder der Lack sich auf der Rückseite der Folie, das heißt zwischen der Folie und dem Substrat, befindet, kann eine geringe Dicke der Folie idealerweise in Verbindung mit Transparenz oder Teiltransparenz zu einer guten Erkennbarkeit und einer guten Ausrichtung der Pigmente führen.

Es kann ferner vorgesehen sein, dass die Folie transparent ist und dass der Lack oder die Farbe zwischen dem Substrat und der Folie angeordnet ist. Auf diese Weise ist die Farbe oder der Lack auf der Rückseite der Folie, das heißt zwischen der Folie und dem Substrat, geschützt angeordnet. Die Farbe oder der Lack kann auch auf der Rückseite der Folie angeordnet sein. In diesem Fall besteht bei der Herstellung direkter Kontakt zwischen dem Magnet und der Farbe oder des Lacks beziehungsweise der magnetisch orientierbaren Effektpigmente. Dadurch kann die Orientierung der Pigmente verbessert werden.

Ein erfindungsgemäßer Datenträger, wie ein Wertdokument oder eine Chipkarte, umfasst einen Träger, an oder in welchem ein Sicherheitsmerkmal wie zuvor beschrieben angeordnet ist. Der Datenträger kann auch eine Verpackung wie zum Beispiel eine Sicherheitsverpackung mit Sicherheitssiegel zum Beispiel für Medikamente sein. Ebenso kann der Datenträger ein derartiges Sicherheitssiegel sein. Das Sicherheitsmerkmal kann vollständig in einer Öffnung des Datenträgers angeordnet sein. Die Öffnung mit dem darin befindlichen Sicherheitsmerkmal kann zum Beispiel mittels einer oder mehrerer Folien abgedeckt sein. Ansonsten gelten die gleichen Vorteile und Modifikationen wie zuvor beschrieben.

Es kann vorgesehen sein, dass das Wertdokument ein Pass- oder Ausweisdokument ist. Letztlich kann das Sicherheitsmerkmal an jedem Datenträger wie einem Wertdokument oder einer Chipkarte angebracht sein.

Ein erfindungsgemäßes Laminierblech für die Herstellung eines Sicherheitsmerkmals für einen Datenträger ist in Anspruch 10 definiert. Das Laminierblech kann in dem Verfahren zur Herstellung eines zuvor beschriebenen Sicherheitsmerkmals verwendet werden. Als Magnete können Permanent- oder Elektromagnete vorgesehen sein. Die Magnete können zum Beispiel in Ausnehmungen des Laminierblechs angeordnet sein. Ansonsten gelten entsprechend die gleichen Vorteile und Modifikationen wie zuvor beschrieben.

Es kann vorgesehen sein, dass mehrere Kartenpositionen auf dem Laminierblech vorgesehen sind und dass mindestens ein Magnet in jeder Kartenposition vorgesehen ist. Als Kartenpositionen sind diejenigen Bereiche definiert, an denen später aus dem Substrat samt einer oder mehrerer Folien die Sicherheitsmerkmale oder Datenträger herausgelöst werden. Die Magnete können fest in dem Laminierblech fixiert sein oder in einer Ausnehmung oder Ausfräsung im Blech lose und flexibel eingelegt sein.

Die Erfindung wird nachfolgend mit Bezug auf die beiliegenden Zeichnungen beispielhaft beschrieben. Darin zeigen
- Fig. 1:: eine Draufsicht eines Datenträgers mit einem Sicherheitselement;
- Fign. 2:: einen Querschnitt eines Datenträgers im Teilbereich des Sicherheitselements;
- Fig. 3: eine prinzipielle Darstellung der Herstellung eines Datenträgers mit einem Sicherheitsmerkmal mittels einer Laminiervorrichtung;

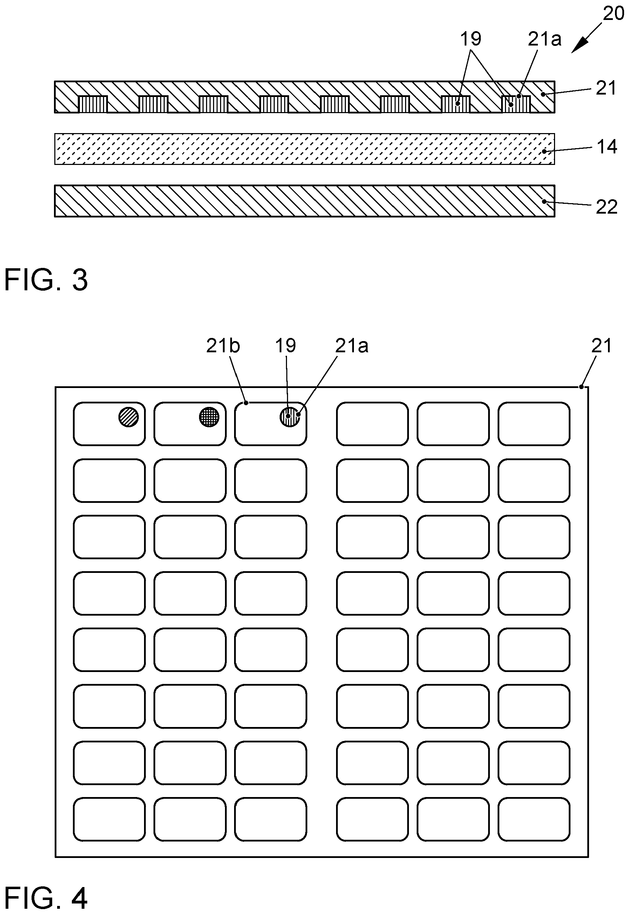

- Fig. 3:: eine prinzipielle Darstellung eines Laminierblechs für die Herstellung eines Sicherheitsmerkmals; und
- Fig. 4:: ein Verfahren zur Herstellung eines Sicherheitsmerkmals für einen Datenträger.

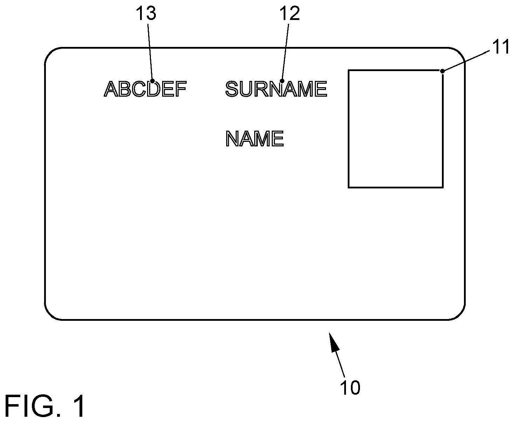

Fig. 1 zeigt eine Aufsicht auf einen Datenträger 10 in schematischer Darstellung. Der Datenträger 10 ist hier ein flächiges Wertdokument in einem zur ständigen Mitführung durch eine Person geeigneten Format und kann ein Pass- und Ausweisdokument oder dergleichen sein. Ebenso kann der Datenträger 10 eine Chipkarte sein. In dem in Fig. 1 dargestellten Beispiel ist der Datenträger 10 ein Ausweisdokument. Der Datenträger 10 enthält ein Sicherheitselement 11, zum Beispiel in Form eines Symbols. Das Sicherheitselement 11 nimmt einen Teilbereich der Oberseite des Datenträgers 10 ein und bildet ein Sicherheitsmerkmal. Es ist durch eine Person mit bloßem Auge erkennbar und auf Vorhandensein eines vorgegebenen Merkmals oder Eigenschaft prüfbar. In einem beispielhaft zugrundegelegten Ausweisdokument hat das Sicherheitselement 11 typischerweise eine Größe von 0,25 cm² bis 25 cm², wobei auch größere und ggf. auch kleinere Abmessungen möglich sind. Das Sicherheitselement 11 kann ein optisch variables Element sein oder enthalten, das dem Betrachter unter unterschiedlichen Betrachtungswinkeln einen unterschiedlichen Bildeindruck vermitteln und beispielsweise je nach Betrachtungswinkel einen anderen Farb- oder Helligkeitseindruck und/ oder ein anderes graphisches Motiv zeigen kann.

Der Datenträger 10 enthält weitere personenbezogene Daten 12 wie zum Beispiel den Vor- und Nachnamen des Inhabers. Darüber hinaus kann die Ausweiskarte weitere Daten 13, wie etwa Geburtsdatum, Nationalität, Ausstellungsbehörde, Ausstellungsdatum und dergleichen enthalten.

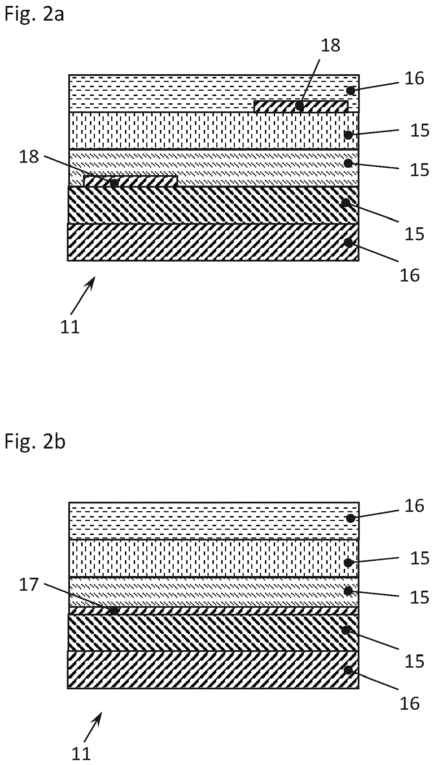

Der grundsätzliche Aufbau des Sicherheitselements 11 wird nun mit Bezug auf die in Figur 2 dargestellten Querschnitte näher erläutert.

Figur 2a zeigt schematisch einen Datenträger 10 in dem durch das Sicherheitselement 11 gebildeten Teilbereich. Er besteht aus mehreren innenliegenden Folienschichten 15 und zwei Folien 16, die Deckschichten bilden. Zur Bildung eines Sicherheitsmerkmals wird eine Farbe 18 auf eine der Folien 15, 16 aufgebracht. Die Farbe kann auch ein Lack sein. Die Farbe 18 ist mit magnetisch orientierbaren Effektpigmenten versehen. Die Folie 15, 16, auf die der Lack bzw. die Farbe 18 aufgebracht wird, kann transparent oder auch opak sein. Die darüberliegenden Folien müssen teiltransparent oder transparent sein. Die darunterliegenden Folien können opak, transparent oder teiltransparent sein. Die Farbe 18 kann auf oder zwischen verschiedenen Folienschichten 15, 16 angeordnet sein. Die Aufbringung kann auf genau einer Folie 15, 16 erfolgen oder auch auf mehreren Folien. Die Aufbringung erfolgt vorzugsweise durch Drucken.

Die Farbe 18 kann vollflächig auf einer Folie 15, 16 vorhanden sein und der Größe des Sicherheitselementes 11 entsprechen oder wie angedeutet partiell, zum Beispiel in Form eines Musters, Symbols, Buchstaben usw. aufgebracht worden sein

Die Folien 15,16 können eine Dicke von beispielsweise 25 µm - 300 µm haben, vorzugsweise 50 µm bis 200 µm.

In einer in Fig. 2b dargestellten Variante kann vorgesehen sein, dass anstelle einer separat aufgetragenen Farbe eine farbige Magnetpigmentfolie 17 bereitgestellt wird, die magnetisch orientierbare Effektpigmente enthält. Die farbige Magnetpigmentfolie 17 kann der Größe des Sicherheitselementes 11 entsprechen oder größer sein und etwa die gesamte Fläche des Datenträgers einnehmen. Die Magnetpigmentfolie 17 wird zwischen einer ersten Folie 15 und einer zweiten Folie 15, 16 aufgebracht.

Die Farbe 18 bzw. die Magnetpigmentfolie 17 müssen ausreichend hitzebeständig sein, so dass die darin enthaltenen magnetisch orientierbaren Effektpigmente in einem Laminierprozess nicht beschädigt werden.

Die Folien 15 und 16 mit der aufgebrachten Farbe 18 oder der Magnetpigmentfolie 17 werden zu einem Datenträger 10 laminiert.

Die auf der Folie 15 vorhandene Farbe 18 bzw. die Magnetpigmentfolie 17 kann während des Laminierens vollflächig oder selektiv einem oder mehreren Magneten 19 ausgesetzt worden sein, so dass die Effektpigmente gezielt magnetisch orientiert und in dieser Position fixiert wurden.

Diese gezielte magnetische Orientierung wird vor dem Laminieren so berechnet, dass ein gewünschter optischer Effekt realisiert wird. Zum Beispiel können die Pigmente durch das Magnetfeld eine im Wesentlichen homogene, spiegelnde Fläche ausbilden. Eine Anordnung der einzelnen Pigmente kann sozusagen nebeneinander sein, das heißt dass die Pigmente im Wesentlichen entlang einer Flächennormale zu der Folie 15 beziehungsweise senkrecht zur Oberfläche des Sicherheitselements 11 angeordnet sind.

Der Datenträger 10 kann zusätzliche Schichten, beispielsweise eine oder mehrere Schutzschichten oder mit anderen Sicherheitselementen versehene Funktionsschichten, umfassen.

Fig. 3 zeigt eine prinzipielle Darstellung der Herstellung eines Sicherheitsmerkmals beziehungsweise eines Datenträgers mit einem Sicherheitsmerkmal 11 mittels einer Laminiervorrichtung 20. Die Laminiervorrichtung 20 ist nur prinzipiell dargestellt.

Insbesondere sind Mittel zum Erzeugen von Druck und/oder einer erhöhten Temperatur nicht dargestellt. Dargestellt ist der Teilbereich des Datenträgers 10, in dem das Sicherheitsmerkmal 11 ausgebildet wird.

Dargestellt sind zwei Laminierbleche 21 und 22, zwischen denen der Datenträger 10 im Teilbereich des Sicherheitsmerkmals 11 laminiert wird. In diesem Bearbeitungsschritt liegt der Datenträger 10 in einem großen Bogen oder einer Endlosfolie in Form eines Schichtenstapels 14 bestehend aus Folien 15, 16, auf die wie beschrieben Farbe 18 aufgebracht oder zwischen denen eine Magnetpigmentfolie 17 angeordnet wurde, vor. Der Schichtenstapels 14 wird zwischen die beiden Laminierbleche 21 und 22 bewegt. Daraufhin werden die beiden Laminierbleche 21 und 22 an den Schichtenstapels 14 geführt, um Druck auf diesen aufzubauen. Zugleich wird eine üblicherweise deutliche Temperaturerhöhung vorgenommen, um das Kunststoffmaterial des Schichtenstapels 14 anzuschmelzen und zum Fließen zu bringen.

In das Laminierblech 21 sind eine Vielzahl von Magneten 19 eingelassen. Die Magnete 19 können Permanent- oder Elektromagnete sein und sind ausgerichtet. Sie dienen zur Ausrichtung von magnetisch orientierbaren Effektpigmenten, welche in der Farbe 18 gelöst sind. Dazu enthält das Laminierblech 21 eine entsprechende Anzahl von Öffnungen 21a, in welche die Magneten 19 jeweils eingesetzt sind. Bei dem Laminieren wird die Farbe 18 bzw. die Magnetpigmentfolie so weit erwärmt, dass die magnetisch orientierbaren Effektpigmente wieder beweglich sind.

Beim Laminieren werden die Magnete 19 an den Schichtenstapels 14 und damit an die Farbe 18 bzw. die Magnetpigmentfolie herangeführt. Entsprechend der Ausrichtung der Magnete 19 werden dabei die zu diesem Zeitpunkt beweglichen Effektpigmente ebenfalls magnetisch ausgerichtet. Die Farbe 18 bzw. die Magnetpigmentfolie kann anschließend wie herkömmlich bei der Laminierung aushärten. Dabei werden die Effektpigmente in der gezielt vorgenommenen Ausrichtung fixiert.

Der Lack oder die Farbe 18 kann ein lösemittelhaltiges, wasserbasierendes 1k oder 2k System sein. Die magnetisch orientierbaren Effektpigmente können verkapselt sein.

In dem gegenüberliegenden Laminierblech 22 sind keine Öffnungen 21a mit Magneten 19 vorgesehen. Sollte ein entsprechender optischer Effekt auch auf der Rückseite des Sicherheitsmerkmals 11 beziehungsweise des Datenträgers 10 gewünscht sein, kann auch das Laminierblech 22 Öffnungen 21a mit Magneten 19 aufweisen.

Fig. 4 zeigt eine prinzipielle Darstellung eines Laminierblechs 21 für die Herstellung eines Sicherheitsmerkmals 11 beziehungsweise eines Datenträgers 10.

Das Laminierblech 21 umfasst mehrere Kartenpositionen 21b, wobei in jeder Kartenposition 21b mindestens ein Magnet 19 in einer Öffnung 21a vorgesehen ist. Innerhalb der Kartenposition 21b ist der Magnet 19 beziehungsweise die Öffnung 21a an einer vorbestimmten Position angeordnet, an welcher nach der Herstellung der gewünschte optische Effekt sichtbar sein soll.

Es ist möglich, mehrere Magnete 19 beziehungsweise Öffnungen 21a innerhalb einer Kartenposition 21b vorzusehen.

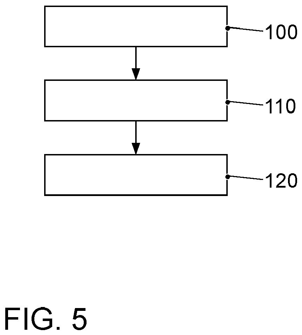

Figur 5 zeigt ein Verfahren zur Herstellung eines Sicherheitsmerkmals 11 für einen Datenträger 10.

In einem ersten Schritt 100 erfolgt ein Bereitstellen eines Datenträgers 10. Der Datenträger 10 kann zum Beispiel aus einem Kunststoff wie PET, PEC, PC, PVC oder PP bestehen.

In einem zweiten Schritt 110 erfolgt ein Aufbringen eines Lacks oder einer Farbe 18 mit magnetisch orientierbaren Effektpigmenten auf eine oder mehrere Folien 15, 16. Das Aufbringen erfolgt zum Beispiel in einem Druckvorgang.

Alternativ zum Aufbringen einer Farbe mit darin enthalten magnetisch orientierbaren Pigmenten kann auch eine separate farbige Magnetpigmentfolie aufgebracht werden, die magnetisch orientierbare Pigmente vollflächig oder zumindest im Bereich des Sicherheitselementes 11 enthält.

Die Magneteffektpigmente enthalten magnetisches Material, so dass sie, wenn sie beweglich sind oder gemacht wurden, mittels eines Magnetfeldes orientierbar sind. In der flüssigen Farbe 18 bzw. in der aufgeschmolzenen Magnetpigmentfolie 17 sind die Pigmente beweglich. In einem Laminierprozess wird deshalb die Farbe 18 gezielt verflüssigt bzw. die Magnetpigmentfolie 17 aufgeschmolzen. In einem dritten Schritt 120 erfolgt ein Laminieren des Datenträgers 10 mit den Folien 15. Durch nachfolgendes Aufbringen von Druck und Temperatur erfolgt die Fixierung der aufeinandergelegten Folien 15.

Das Laminieren erfolgt mittels zweier einander gegenüber angeordneter Laminierbleche 21, 22. Zumindest ein Laminierblech 21 weist wenigstens einen oder zweckmäßig, wie in Fig. 3 angedeutet, mehrere Magnete 19 auf.

Bei dem Laminieren erfolgt zunächst ein Verflüssigen des Lacks oder der Farbe 18 bzw. ein Aufschmelzen der Magnetpigmentfolie. Die darin enthaltenen magnetisch orientierbaren Effektpigmente werden dadurch beweglich. Sobald die Effektpigmente beweglich sind werden sie durch die die Magnete 19 ausgerichtet. Die Magnete 19 können Permanent- oder Elektromagnete sein. Im Falle von Elektromagneten werden diese zum Beispiel bei dem Start des Laminierens oder kurz darauf aktiviert.

Während des Laminierens können zusätzliche Prägeschritte durchgeführt werden.

Nach dem Laminieren kann der Bogen in einzelne Datenträger 10 zerteilt werden. Dies kann zum Beispiel mittels eines Lasers oder eines Stanzwerkzeuges geschehen.

Die Reihenfolge der Schritte ist nicht notwendigerweise auf diese Reihenfolge beschränkt. So kann zum Beispiel das Aufbringen eines Lacks oder einer Farbe auch als erster Schritt erfolgen. Insbesondere können die drei Schritte des Laminierens, des Verflüssigens und des Ausrichtens zeitgleich oder quasi-zeitgleich erfolgen.

Mit diesem Verfahren wird das zuvor beschriebene Sicherheitselement 11 beziehungsweise der Datenträger 10 erzeugt. Dabei wird das zuvor beschriebene Laminierblech 21 verwendet.

## Patentansprüche

1. Verfahren zur Herstellung eines Sicherheitsmerkmals (11) für einen Datenträger (10), mit den Schritten:
- Bereitstellen mindestens zweier Folien (15, 16);
- Aufbringen eines Lacks oder einer Farbe (18) mit magnetisch orientierbaren Effektpigmenten auf eine Folie (15, 16);
- Laminieren der Folien (15, 16) mittels eines Laminierblechs (21), das mindestens einen Magneten (19) aufweist, wobei beim Laminieren die Schritte ausgeführt werden:
- Verflüssigen der Farbe (18) mit magnetisch orientierbaren Effektpigmenten; und
- Ausrichten der magnetisch orientierbaren Effektpigmente mittels der Magnete (19).

2. Verfahren nach Anspruch 1, **dadurch gekennzeichnet, dass** anstelle einer Farbe (18) eine Magnetpigmentfolie (17) mit magnetisch orientierbaren Effektpigmenten zwischen einer ersten Folie (15) und einer zweiten Folie (15, 16) aufgebracht wird.

3. Verfahren nach Anspruch 1, **dadurch gekennzeichnet, dass** die Farbe (18) ein lösemittelhaltiges, wasserbasierendes 1k oder 2k System ist.

4. Verfahren nach einem der Ansprüche 1 bis 3, **dadurch gekennzeichnet, dass** die magnetisch orientierbaren Effektpigmente verkapselt sind.

5. Sicherheitsmerkmal für einen Datenträger (10), erhältlich durch das Verfahren nach einem der Ansprüche 1 bis 4.

6. Sicherheitsmerkmal für einen Datenträger (10) nach Anspruch 5, **dadurch gekennzeichnet, dass** die Folie (15, 16) eine Dicke von 25 - 300 µm, vorzugsweise von 50 - 200 µm aufweist.

7. Sicherheitsmerkmal nach Anspruch 5 oder 6, **dadurch gekennzeichnet, dass** die Folie (15, 16) transparent ist und dass der Lack oder die Farbe (18) zwischen dem Substrat (15) und der Folie (16) angeordnet ist.

8. Datenträger (10), wie ein Wertdokument oder eine Chipkarte, mit einem Träger, an oder in welchem ein Sicherheitsmerkmal (11) nach einem der Ansprüche 5 bis 7 angeordnet ist.

9. Datenträger (10) nach Anspruch 8, **dadurch gekennzeichnet, dass** das Wertdokument ein Pass- oder Ausweisdokument ist.

10. Laminierblech (21) für die Herstellung eines Sicherheitsmerkmals (11) für einen Datenträger (10) in einem Verfahren nach einem der Ansprüche 1 bis 4, aufweisend einen Magneten (19) eingerichtet zur Ausrichtung von magnetisch orientierbaren Effektpigmenten.

11. Laminierblech (21) nach Anspruch 10, **dadurch gekennzeichnet, dass** mehrere Kartenpositionen (21b) auf dem Laminierblech (21) vorgesehen sind und dass mindestens ein Magnet (19) in jeder Kartenposition (21b) vorgesehen ist.

## Claims

1. Method for producing a security feature (11) for a data medium (10), with the steps of:
- providing at least two foils (15, 16);
- applying a varnish or an ink (18) with magnetically orientable effect pigments to one foil (15, 16);
- laminating the foils (15, 16) by means of a laminating plate (21) which has at least one magnet (19), the following steps being performed during lamination:
- liquefying the ink (18) with magnetically orientable effect pigments; and
- aligning the magnetically orientable effect pigments by means of the magnets (19).

2. Method according to Claim 1, **characterized in that** instead of an ink (18), a magnetic pigment foil (17) with magnetically orientable effect pigments is applied between a first foil (15) and a second foil (15, 16).

3. Method according to Claim 1, **characterized in that** the ink (18) is a solvent-containing, water-based 1-component or 2-component system.

4. Method according to any of Claims 1 to 3, **characterized in that** the magnetically orientable effect pigments are encapsulated.

5. Security feature for a data medium (10), obtainable by the method according to any of Claims 1 to 4.

6. Security feature for a data medium (10) according to Claim 5, **characterized in that** the foil (15, 16) has a thickness of 25 - 300 µm, preferably of 50 - 200 µm.

7. Security feature according to Claim 5 or 6, **characterized in that** the foil (15, 16) is transparent and **in that** the varnish or the ink (18) is arranged between the substrate (15) and the foil (16).

8. Data medium (10), such as a value document or a chip card, with a carrier on or in which a security feature (11) according to any of Claims 5 to 7 is arranged.

9. Data medium (10) according to Claim 8, **characterized in that** the value document is a passport or identity document.

10. Laminating plate (21) for producing a security feature (11) for a data medium (10) in a method according to any of Claims 1 to 4, comprising a magnet (19) configured for the alignment of magnetically orientable effect pigments.

11. Laminating plate (21) according to Claim 10, **characterized in that** multiple card positions (21b) are provided on the laminating plate (21) and **in that** at least one magnet (19) is provided in each card position (21b) .

## Revendications

1. Procédé de fabrication d'une caractéristique de sécurité (11) destinée à un support de données (10), ledit procédé comprenant les étapes suivantes :
- fournir au moins deux films (15, 16) ;
- appliquer un vernis ou une peinture (18), pourvu(e) de pigments à effet magnétiquement orientables, sur un film (15, 16) ;
- laminer les films (15, 16) à l'aide d'une feuille de laminage (21) qui comporte au moins un aimant (19), les étapes suivantes étant réalisées lors du laminage :
- liquéfier la peinture (18) avec des pigments à effet magnétiquement orientables ; et
- orienter les pigments à effet magnétiquement orientables à l'aide des aimants (19).

2. Procédé selon la revendication 1, **caractérisé en ce que**, au lieu d'une peinture (18), un film de pigments magnétiques (17) comprenant des pigments à effet magnétiquement orientables est appliqué entre un premier film (15) et un deuxième film (15, 16).

3. Procédé selon la revendication 1, **caractérisé en ce que** la peinture (18) est un système 1k ou 2k à base d'eau et de solvant.

4. Procédé selon l'une des revendications 1 à 3, **caractérisé en ce que** les pigments à effet magnétiquement orientables sont encapsulés.

5. Caractéristique de sécurité destinée à un support de données (10) et pouvant être obtenue par le procédé selon l'une des revendications 1 à 4.

6. Caractéristique de sécurité destinée à un support de données (10) selon la revendication 5, **caractérisée en ce que** le film (15, 16) a une épaisseur de 25 à 300 µm, de préférence de 50 à 200 µm.

7. Caractéristique de sécurité selon la revendication 5 ou 6, **caractérisée en ce que** le film (15, 16) est transparent et **en ce que** le vernis ou la peinture (18) est disposé(e) entre le substrat (15) et le film (16).

8. Support de données (10), tel qu'un document de valeur ou une carte à puce, comprenant un support sur ou dans lequel est disposée une caractéristique de sécurité (11) selon l'une des revendications 5 à 7.

9. Support de données (10) selon la revendication 8, **caractérisé en ce que** le document de valeur est un passeport ou une pièce d'identité.

10. Feuille de laminage (21) destinée à la fabrication d'une caractéristique de sécurité (11) destinée à un support de données (10) conformément à un procédé selon l'une des revendications 1 à 4, ladite feuille de laminage comportant un aimant (19) conçu pour orienter des pigments à effet magnétiquement orientables.

11. Feuille de laminage (21) selon la revendication 10, **caractérisée en ce que** plusieurs positions de carte (21b) sont prévues sur la feuille de laminage (21) et **en ce qu'**au moins un aimant (19) est prévu dans chaque position de carte (21b).
